# DEMANDE DE BREVET EUROPEEN

(11) **EP 1 117 240 A1**
(43) Date de publication de la demande: **18.07.2001**
(21) Numéro de dépôt: 00460002.9
(22) Date de dépôt: 14.01.2000
(51) Int. Cl.: H04M 3/533

(54) **Procédé de gestion des ressources d'une plate-forme multimédia et plate-forme multimédia pour la mise en oeuvre de ce procédé.**

(71) Demandeur: TRT Lucent Technologies (SA), 75008 Paris (FR)
(72) Inventeur: Richter, Gérard, 06640 Saint Jeannet (FR); Solves, Jean-Yves, 06600 Antibes (FR); Fant, Walter J., Los Gatos, California 95033 (US)
(74) Mandataire: Ballot, Paul

(57) **Abrégé**

L'invention concerne un procédé de gestion de ressources de traitement de signal d'une plate-forme multimédia conçue pour appliquer des opérations de traitement de signal à des signaux multimédia. Il comporte notamment les étapes suivantes :
- définir des fonctions multimédia aptes chacune à contrôler le fonctionnement d'un ensemble de ressources de traitement de signal de la plate-forme multimédia, à les mettre en relation, et à adapter le contenu dudit ensemble de ressources de traitement de signal en fonction du signal multimédia à traiter, et
- employer lesdites fonctions multimédia pour appliquer lesdites opérations de traitement de signal auxdits signaux multimédia.

## Description

La présente invention concerne un procédé de gestion des ressources de traitement de signal d'une plate-forme multimédia.

Les plates-formes multimédia sont des systèmes dans lesquels sont mis en oeuvre des applications multimédia, par exemple une application de messagerie unifiée ou une application de serveur vocal interactif. Une plate-forme de messagerie unifiée désigne un système permettant d'enregistrer des messages de natures diverses, tels que des messages téléphoniques, des messages électroniques ou des télécopies, et de les présenter ensuite à leur destinataire sous leur forme d'origine (voix, texte, image) ou sous une forme nouvelle. Parmi les services multimédia proposés par une plate-forme de messagerie unifiée, on peut citer à titre d'illustration les services multimédia suivants :
1) enregistrement des messages téléphoniques;
2) enregistrement des messages électroniques;
3) écoute des messages téléphoniques;
4) écoute des messages électroniques;
5) édition des messages téléphoniques sur fax.

Pour mettre en oeuvre ces services, la plate-forme de messagerie unifiée comporte diverses ressources de traitement de signal, notamment des ressources pour raccorder la plate-forme multimédia au réseau téléphonique, des ressources pour enregistrer les messages téléphoniques et électroniques dans une unité de stockage de la plate-forme, des ressources pour lire les messages enregistrées, des ressources pour convertir les messages électroniques en messages audio, des ressources pour convertir les messages téléphoniques en texte. Avantageusement, la plate-forme comporte également des ressources pour comprimer les messages avant leur enregistrement ou des ressources d'annulation d'écho. Toutes ces ressources de traitement de signal se présentent sous une forme logicielle ou matérielle.

Actuellement, ces ressources de traitement de signal sont commandées directement par l'application de la plate-forme multimédia. Toute modification au niveau des ressources de la plate-forme multimédia (par exemple, ajout d'une ressource ou remplacement d'une ressource par une ressource plus récente) implique de modifier la couche application de la plate-forme multimédia, c'est-à-dire oblige à réécrire ou compléter le programme d'application de la plate-forme. Or, étant donné la constante évolution des matériels dans le domaine du multimédia, il est important de disposer d'une plate-forme multimédia évolutive, c'est-à-dire qui puisse supporter tout ajout ou modification de ressource de traitement du signal ou de protocole de transport.

Aussi, l'invention procède d'une recherche menée relativement à des plates-formes multimédia en vue d'améliorer leurs capacités d'évolution.

A cet effet, l'invention a pour objet un procédé de gestion de ressources de traitement de signal d'une plate-forme multimédia conçue pour appliquer des opérations de traitement de signal à des signaux multimédia, caractérisé en qu'il comporte les étapes suivantes :
- définir des fonctions multimédia aptes chacune à contrôler le fonctionnement d'un ensemble de ressources de traitement de signal de la plate-forme multimédia, à les mettre en relation, et à adapter le contenu dudit ensemble de ressources de traitement de signal en fonction du signal multimédia à traiter, et
- employer lesdites fonctions multimédia pour appliquer lesdites opérations de traitement de signal auxdits signaux multimédia.

Les fonctions multimédia constituent ainsi un niveau de commande intermédiaire entre le programme applicatif et les ressources de traitement de signal de la plate-forme multimédia. L'étape permettant de définir ces fonctions multimédia consiste à réunir des fonctions de base qui sont configurées pour utiliser les ressources disponibles dans la plate-forme multimédia.

Par ailleurs, afin de connaître les ressources de traitement de signal disponibles dans la plate-forme multimédia, chaque ressource de traitement de signal se déclare lors de sa première mise sous tension auprès d'un dispositif de négociation de la plate-forme multimédia.

L'invention a également pour objet une plate-forme multimédia pour la mise en oeuvre de ce procédé de gestion des ressources de traitement du signal. Cette plate-forme multimédia comporte une pluralité de ressources de traitement de signal, une interface de ressources dans laquelle sont définies les opérations permettant d'agir sur lesdites ressources de traitement de signal, une unité de gestion des ressources pour allouer dynamiquement les ressources de traitement de signal en fonction de l'opération de traitement de signal à accomplir et gérer les échanges entre ressources de traitement de signal, une interface d'application dans laquelle sont définies lesdites fonctions multimédia et, une unité d'application comprenant un programme d'application pour appliquer lesdites fonctions multimédia.

D'autres caractéristiques et avantages de l'invention apparaîtront à la lecture de description détaillée suivante qui est donnée à titre d'exemple non limitatif et qui est faite en référence aux dessins annexés, parmi lesquels :
- la figure 1 est un schéma d'organisation d'une plate-forme multimédia apte à mettre en oeuvre le procédé de l'invention;
- la figure 2 représente une opération de déclaration d'une carte multimédia auprès d'un dispositif de négociation d'une plate-forme conforme au schéma de la figure 1;
- la figure 3 représente un premier schéma possible d'une fonction FoncConnexionRéseau conforme à l'invention;
- la figure 4 représente un deuxième schéma possible d'une fonction FoncConnexionRéseau conforme à l'invention;
- la figure 5 représente un schéma possible d'une fonction FoncGénérationFlux conforme à l'invention;
- la figure 6 montre une étape de création de groupe de fonctions multimédia au sein d'une plate-forme telle que montrée à la figure 1;
- la figure 7 représente un groupe de fonctions multimédia pour une plate-forme de messagerie vocale.

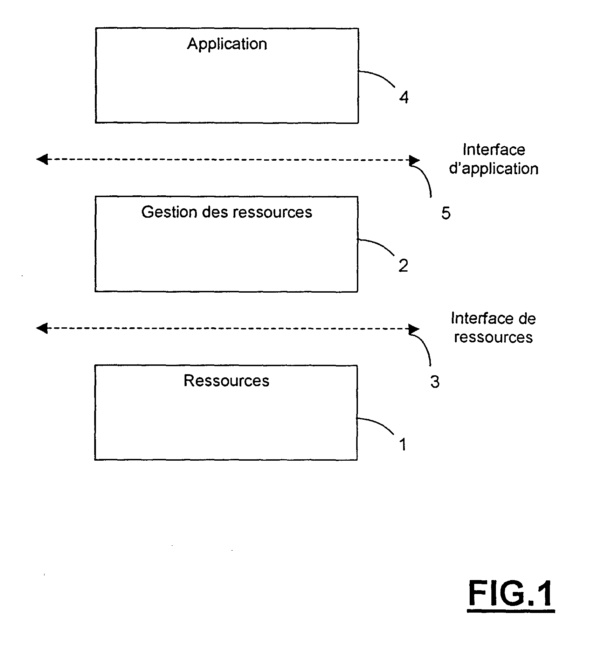

L'organisation d'une plate-forme multimédia conforme à l'invention est montrée à la figure 1. La plate-forme multimédia peut être modélisée par trois couches communiquant entre elles au travers d'interfaces adaptées. En référence à la figure 1, la plate-forme multimédia comporte une première couche de ressources référencée 1. Cette couche regroupe les ressources de traitement de signal de la plate-forme multimédia. Elle communique avec une couche de gestion des ressources 2 par l'intermédiaire d'une interface de ressources 3. La couche de gestion des ressources 2 est chargée d'allouer dynamiquement les ressources de traitement de signal de la plate-forme multimédia en fonction du service multimédia à accomplir, de contrôler leur fonctionnement et d'établir les échanges de données entre ressources. Enfin, la couche de gestion des ressources 2 communique avec une couche d'application 4 par l'intermédiaire d'une interface de haut niveau 5 appelée interface d'application.

Selon l'invention, l'interface d'application 5 et le programme applicatif de la couche d'application 1 de la plate-forme multimédia reste inchangée lorsqu'on remplace une ressource de traitement de signal de la plate-forme multimédia par une ressource de traitement de signal plus performante ou lorsqu'on rajoute une ressource de traitement de signal dont la fonctionnalité est déjà connue. Bien entendu, s'il apparaît sur le marché une nouvelle ressource de traitement de signal remplissant une fonctionnalité inconnue au moment de la conception de la plate-forme, l'interface d'application pourra être complétée le cas échéant.

Lorsqu'une ressource de traitement de signal est ajoutée ou remplacée dans la plate-forme multimédia, cette dernière se déclare automatiquement lors de sa première mise sous tension auprès de la couche de gestion des ressources 2. Ses caractéristiques y sont alors enregistrées.

Au niveau de la plate-forme multimédia, les ressources de traitement de signal sont contenues dans des blocs de traitement de signal. Un même bloc peut comporter plusieurs ressources de traitement de signal, par exemple un dispositif d'enregistrement de messages audio, un dispositif de lecture de ces messages et un dispositif d'annulation d'écho. Par ailleurs, plusieurs blocs identiques peuvent être disposées sur une même carte multimédia. La carte multimédia comporte alors un serveur de bloc avec lequel communique la couche de gestion des ressources 2 lors de l'enregistrement des caractéristiques des ressources de la carte multimédia.

Les ressources de traitement de signal sont classées par types. Une liste non exhaustive de types de ressource possibles est donnée ci-après:
■ Ressource : extraction de données (par exemple, le contenu des messages ou des informations de menu) dans une unité de stockage de la plate-forme;
■ ResGénérationFluxAudio : génération d'un flux multimédia à partir de données audio issues par exemple d'une ressource de type Ressource;
■ ResEnregistrement : enregistrement de données (par exemple des messages) dans une unité de stockage de la plate-forme;
■ ResAppelLigne : appel d'une ligne téléphonique;
■ ResDétectionSignaux : détection de signaux (DTMF,...) ;
■ ResGénérationSignaux: génération de signaux (bips,...) ;
■ ResReconnaissanceVocale : reconnaissance vocale;
■ ResSynthèseVocale : synthèse vocale;
■ ResConversionFormat : conversion de format;
■ ResAnnulationEcho : annulation d'écho;
■ ResCompression : compression de données.

Pour chacun de ces types de ressource, il est prévu un ensemble de paramètres de description représentatifs de ses fonctionnalités. A titre d'exemple, les paramètres de description d'une ressource de type ResConversionFormat sont CodageEntrée et CodageSortie définissant respectivement le format de codage accepté en entrée par la ressource et le format de codage de sortie délivré par celle-ci. Les paramètres de description d'une ressource de type ResReconnaissanceVocale sont par exemple TypeReconnaissance, LangueSupportée, CodageEntrée définissant respectivement le type de reconnaissance vocale employé (en continu, par mots clés,...), la langue reconnue (Français, Anglais, Italien,...) et le format de codage accepté en entrée de la ressource.

Chaque ressource de traitement de signal comporte un ou plusieurs points d'entrée de flux et/ou un ou plusieurs points de sortie de flux pour, respectivement, recevoir ou délivrer un flux multimédia. Par exemple, une ressource de type ResSynthèseVocale comprend un point d'entrée de flux pour recevoir des signaux de format texte et un point de sortie de flux pour délivrer des signaux de format audio. Ces points d'entrée et de sortie de flux permettent de connecter les ressources de traitement de signal entre elles. Par exemple, si un flux multimédia doit être traitée par une ressource A puis par une ressource B, on met alors en relation le point de sortie de flux de la ressource A avec le point d'entrée de flux de la ressource B.

Cette mise en relation fait l'objet d'une négociation entre les points d'entrée et de sortie de flux concernés. Cette négociation est effectuée sous le contrôle de la couche de gestion des ressources 2. Elle porte sur le format de codage des signaux échangés et sur le type de transport employé. La négociation est expliquée ci-après à travers un exemple. On considère une ressource A ayant un point de sortie de flux et une ressource B ayant un point d'entrée de flux. Le point de sortie de flux de la ressource A est apte à délivrer des signaux de format Unicode et ASCII avec un protocole TDM ou TCP. Le point d'entrée de flux de la ressource B est apte à recevoir des signaux de format Unicode ou G721ADPCM avec un protocole UDP ou TDM. Lors de la négociation, le point de sortie de flux de la ressource A interroge le point d'entrée de flux de la ressource B pour connaître les formats de codage et les types de transport acceptés par ce dernier, sélectionne un format de codage et un protocole de transport permettant des échanges entre les deux ressources (dans le cas présent, le format Unicode et le protocole de transport TDM), se configure sur le format de codage et le protocole de transport sélectionnés et demande au point d'entrée de flux de la ressource B de prendre la même configuration. Si les points d'entrée et de sortie de flux n'ont pas de format de codage ou de protocole de transport commun, une requête d'exception est envoyée à la couche d'application 1. En l'absence de format de codage commun, cette exception pourra être résolue par exemple en introduisant un convertisseur de format entre les deux.

Les opérations permettant d'agir sur les ressources de traitement de signal de la plate-forme sont définies dans l'interface de ressources 3. Cette interface définit notamment les opérations permettant de déclarer des ressources auprès de la couche de gestion des ressources 2, d'allouer les ressources en vue de l'exécution d'un service multimédia, de mettre en relation deux ressources si nécessaire et de contrôler le fonctionnement des ressources et les échanges entre ressources. Il est à noter que les instructions permettant de commander le fonctionnement des ressources de traitement de signal de la plate-forme doivent être identiques pour toutes les ressources d'un même type. Par exemple, deux convertisseurs opérant des conversions de format différentes sont commandés par les mêmes instructions. Les instructions de commande associées à chaque type de ressources sont définies une fois pour toutes avant la mise en oeuvre de la plate-forme multimédia.

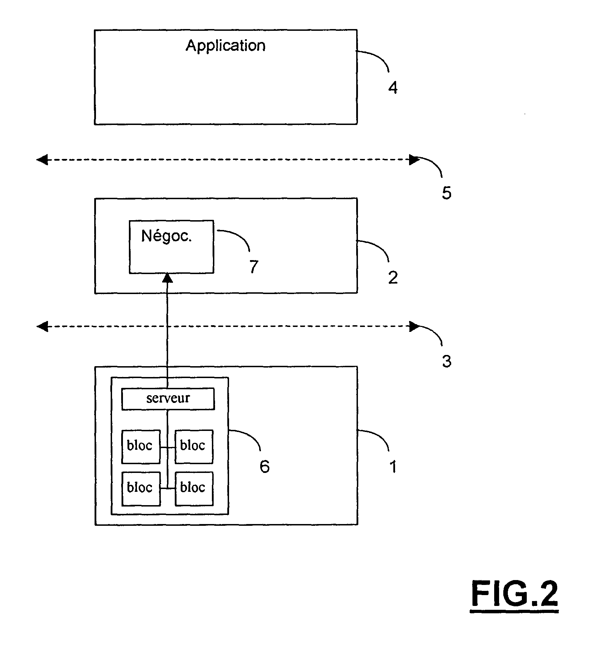

Comme il est mentionné précédemment, les ressources de la plate-forme multimédia se déclarent auprès de la couche de gestion des ressources 2 à leur première mise sous tension. Cette étape de déclaration est illustrée par la figure 2. Sur cette figure, on considère que la couche de ressources 1 de la plate-forme multimédia comporte au moins une carte multimédia 6 comportant quatre blocs identiques de traitement de signal et un serveur de bloc. A la première mise sous tension de la carte multimédia 6, celle-ci se déclare auprès d'un dispositif de négociation 7 (que l'on pourra également appeler "trader" en langue anglaise) prévu dans la couche de gestion des ressources 2. Pendant cette phase de déclaration, le serveur de bloc de la carte 6 transmet au dispositif de négociation 7 la liste des ressources de traitement de signal contenues dans la carte multimédia 6 et la valeur de leurs paramètres de description respectifs. Il lui transmet également des informations de connectivité, notamment l'adresse de chacune des ressources et les couples protocole/réseau permettant d'accéder à ces ressources (par exemple TDM/H100, RTP/internet ou AAL1/ATM).

La couche d'application 4 agit sur la couche de gestion des ressources 2 par l'intermédiaire de l'interface d'application 5 qui définit des fonctions multimédia de haut niveau. Chaque fonction a pour but de fournir une interface de commande simple pour commander un ensemble de ressources de la plate-forme multimédia. La plupart de ces fonctions sont génériques, c'est-à-dire qu'elles s'appliquent directement à tout type de signal multimédia (audio,vidéo,texte).

Une liste non exhaustive de fonctions haut niveau est donnée ci-après:
■ FoncGénérationFlux : Génération d'un flux multimédia à partir de données (messages) enregistrées dans une unité de stockage de la plate-forme;
■ FoncEnregistrement : enregistrement de données (messages) dans une unité de stockage de la plate forme;
■ FoncConnexionRéseau : connexion au réseau téléphonique;
■ FoncReconnaissanceVocale : reconnaissance vocale;
■ FoncDétectionSignaux : détection de signaux.

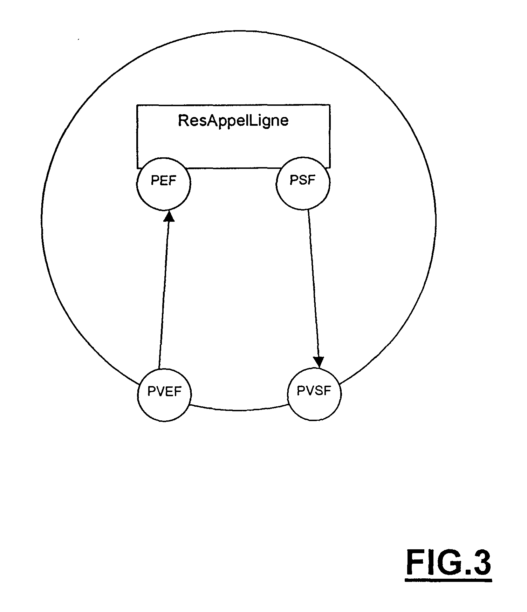

La fonction FoncConnexionRéseau est représentée de façon schématique à la figure 3 dans sa version la plus simple. Elle est principalement construite autour d'une ressource de type ResAppelLigne. Cette ressource est munie d'un point d'entrée de flux PEF et d'un point de sortie de flux PSF par lesquels, respectivement, entre et sort le flux de données. La fonction FoncConnexionRéseau comporte un point virtuel d'entrée de flux PVEF et un point virtuel de sortie de flux PVSF en relation avec les points d'entrée et de sortie de flux de la ressource de type ResAppelLigne respectivement.

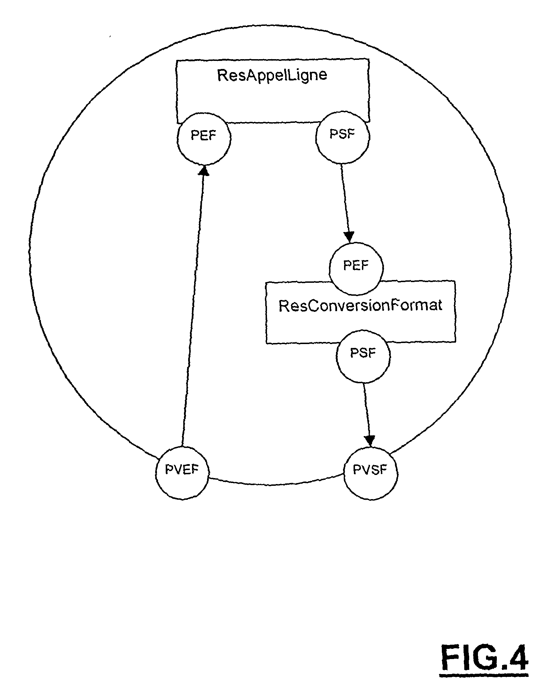

Cette fonction peut être complétée par des ressources supplémentaires, par exemple par une ressource du type ResconversionFormat lorsque le format du message provenant du réseau téléphonique doit être converti pour être traité par la suite par un dispositif de synthèse vocale. La ressource de type ResConversionFormat est alors intercalée entre le point de sortie de flux PSF de la ressource de type ResAppelLigne et le point virtuel de sortie flux PVSF de la fonction. Cet exemple est illustré par la figure 4.

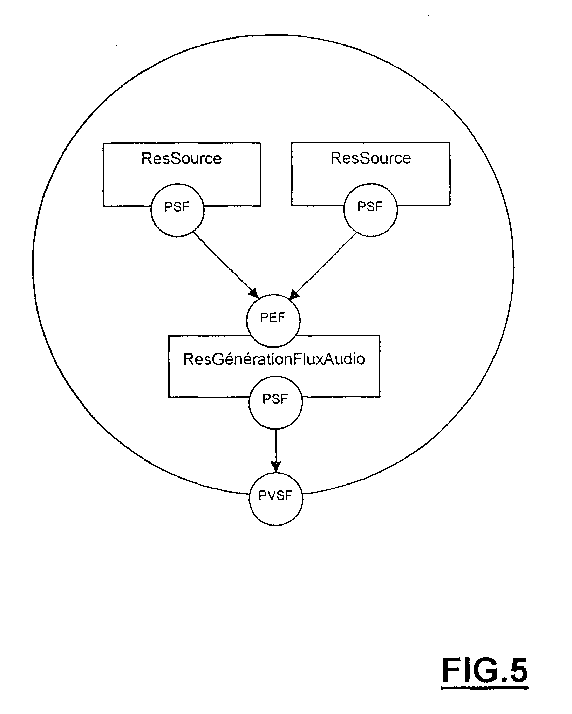

Un autre exemple de fonction est illustré à la figure 5. Il concerne la fonction FoncGénérationFlux. Cette fonction est construite autour de trois ressources : deux ressources de type Ressource (l'une stockant par exemple des messages et l'autre des informations de menu) et une ressource de type ResGénérationFluxaudio. La ressource de type ResGénérationFluxAudio comporte un point d'entrée de flux et un point de sortie de flux et les ressources de type Ressource comportent chacune un point de sortie de flux. Le point de sortie de flux des ressources de type Ressource est connecté au point d'entrée de flux de la ressource de type ResGénérationFluxAudio et le point de sortie de flux de la ressource de type ResGénérationFluxAudio est connecté à un point virtuel de sortie de flux de la fonction FoncGénérationFlux.

Il faut noter que les fonctions multimédia définies dans l'interface d'application 5 sont des fonctions de base conçues pour commander des ressources d'un certain type. Ces fonctions de base doivent être configurées au niveau de la couche de gestion des ressources 2 pour utiliser les ressources de traitement de signal de la plate-forme multimédia concernée, c'est-à-dire que les fonctions de base sont alors complétées pour utiliser des ressources de la plate-forme multimédia accessibles à des adresses données. Cette configuration est effectuée lors de l'installation de la plate-forme multimédia.

Chaque fonction permet de fournir une interface de commande haut niveau à la couche d'application. A titre d'exemple, la fonction FoncGénérationFlux est commandée par les instructions suivantes:
Play()
StopPlay()
PausePlay()
Rewind()
Forward()
AjusterVitesse()
AjusterVolume()

Exécuter l'une de ces instructions de haut niveau revient à exécuter une pluralité d'instructions élémentaires de commande sur les ressources incluses dans la fonction.

Par exemple, l'opération de commande rewind() peut être mise en oeuvre par les instructions élémentaires suivantes:
Rewind():
GénérationFluxAudio. stop (): *(arrêt du flux)*
Source.Setposition(0); *(mise* à *0 du message)*
GénérationFluxAudio.start(); *(génération du flux)*

En outre, chaque fonction est capable de s'adapter aux besoins de l'application. Par exemple, si la fonction FoncGénérationFlux comporte une ressource de type Ressource et une ressource de type ResGénérationFluxAudio et que le message à traiter est un message texte que l'on veut écouter, la fonction FoncGénérationFlux est alors capable d'insérer une ressource de type ResSynthèseVocale entre la ressource de type Ressource et la ressource de type ResGénérationFluxAudio afin de transformer le message texte en un message audio.

Au moment de l'exécution d'un service multimédia, l'application commande par l'intermédiaire des fonctions multimédia les ressources de traitement de signal de la plate-forme multimédia. Ainsi, l'exécution d'une instruction du programme d'application de la plate-forme est expliquée au travers un exemple. On considère l'instruction *play (message1)* où play() est une instruction de commande de la fonction FoncGénérationFlux et *message1* est un message texte enregistré dans une mémoire de la plate-forme. La fonction FoncGénérationFlux est prévue pour exécuter cette instruction. On considère par ailleurs que cette fonction est prévue pour commander une ressource de type Ressource et une autre de type ResGénérationFluxAudio. Au moment de l'exécution de cette instruction, la ressource de type Ressource lit tout d'abord dans la mémoire de la plate-forme l'entête de *message1* dans lequel est indiqué le format du message. La fonction FoncgénérationFlux constate que la ressource de type ResGénérationFluxAudio n'est pas apte à traiter *message1*. La fonction FoncgénérationFlux demande alors au dispositif de négociation 7 de la plate-forme une ressource de type ResSynthèseVocale. Si une telle ressource est disponible, elle est intégrée à la fonction FoncGénérationFlux, sinon un message d'erreur est envoyée à la couche d'application. La fonction FoncGénérationFlux étant complétée par la ressource de type ResSynthèseVocale, elle est en mesure d'exécuter l'instruction *play(message1)*.

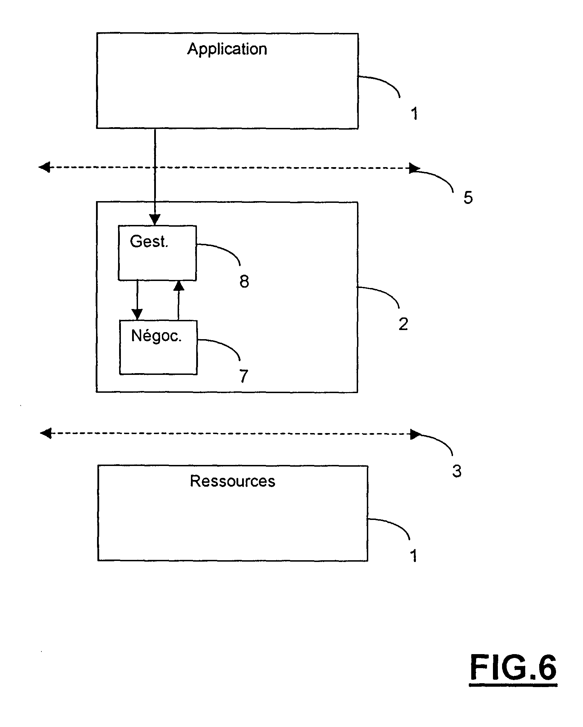

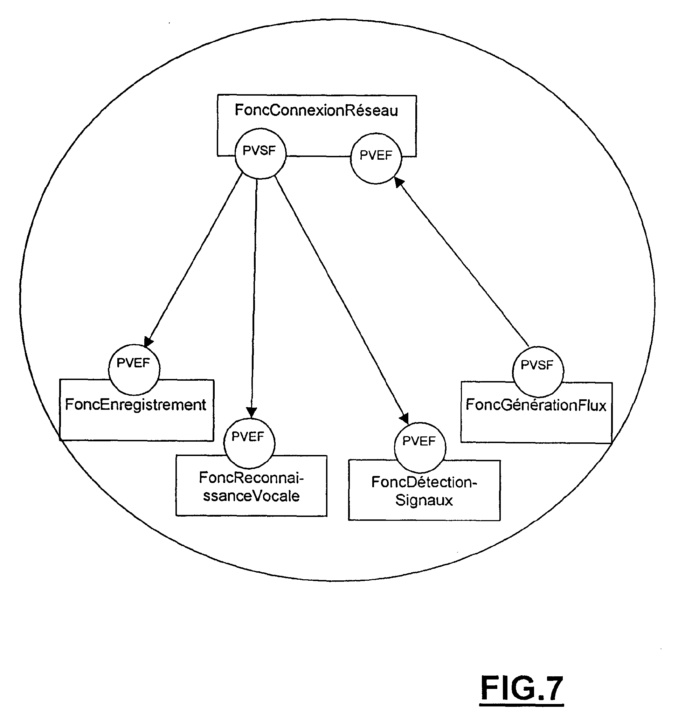

Avantageusement, au moment de l'installation d'une application (par exemple de messagerie vocale) dans la plate-forme multimédia, un groupe de fonctions multimédia est formé, lequel groupe comprend les fonctions multimédia de l'interface d'application 5 permettant de mettre en oeuvre les services multimédia proposés par l'application de la plate-forme multimédia. La formation d'un tel groupe est illustrée à la figure 6. Dans un premier temps, la couche d'application 1 exprime ses besoins en termes de ressources. Puis, elle s'adresse à un gestionnaire de groupe 8 prévu dans la couche de gestion des ressources 2 pour former un groupe de fonctions adapté aux besoins de l'application. Le gestionnaire de groupe 8 interroge ensuite le dispositif de négociation 7 pour connaître le type et l'adresse des ressources de traitement de signal de la plate-forme multimédia. Il configure ensuite les fonctions multimédia de l'interface d'application avec les adresses de ressources fournies par le dispositif de négociation 7. Ce gestionnaire dè groupe est également chargé de connecter les fonctions entre elles si nécessaire. Un groupe de fonctions formé pour une application de messagerie vocale est représenté à la figure 7. Il comprend une fonction FoncConnexionRéseau dont le point virtuel d'entrée de flux est connecté au point virtuel de sortie de flux d'une fonction FoncGénérationFlux et le point virtuel de sortie de flux est connecté au point virtuel d'entrée de flux de 3 fonctions : FoncEnregistrement, FoncDétectionSignaux et FoncReconnaissanceVocale.

La formation d'un tel groupe permet de gérer de manière globale un ensemble de ressources de traitement de signal. Un tel groupe peut être par exemple prévu pour désallouer toutes les ressources de traitement de signal après l'exécution d'un service multimédia afin de les rendre disponibles au lieu de demander à chaque fonction multimédia de le faire.

## Revendications

1. Procédé de gestion de ressources de traitement de signal d'une plate-forme multimédia conçue pour appliquer des opérations de traitement de signal à des signaux multimédia, caractérisé en qu'il comporte les étapes suivantes :
- définir des fonctions multimédia aptes chacune à contrôler le fonctionnement d'un ensemble de ressources de traitement de signal de la plate-forme multimédia, à les mettre en relation, et à adapter le contenu dudit ensemble de ressources de traitement de signal en fonction du signal multimédia à traiter, et
- employer lesdites fonctions multimédia pour appliquer lesdites opérations de traitement de signal auxdits signaux multimédia.

2. Procédé selon la revendication 1, caractérisé en ce que l'étape de définition des fonctions multimédia consiste à réunir des fonctions de base qui sont configurées pour utiliser les ressources disponibles dans la plate-forme multimédia.

3. Procédé selon la revendication 2, caractérisé en ce que les ressources disponibles dans la plate-forme multimédia sont déclarées auprès d'un dispositif de négociation (7) de la plate-forme multimédia lors de leur première mise sous tension.

4. Procédé selon la revendication 2 ou 3, caractérisé en ce que chaque ressource de traitement de signal de la plate-forme multimédia appartient à un type de ressource et en ce que les ressources de traitement de signal d'un même type sont commandées par les mêmes instructions de commande.

5. Procédé selon l'une des revendications précédentes,
caractérisé en ce que, préalablement à toute application d'opérations de traitement de signal à des signaux multimédia, est formé un groupe de fonctions multimédia, lequel groupe comporte toutes les fonctions multimédia nécessaires pour le traitement des signaux multimédia dans une application donnée.

6. Plate-forme multimédia pour la mise en oeuvre du procédé de gestion des ressources de traitement du signal selon les revendications 1 à 5, comportant une pluralité de ressources de traitement de signal,
caractérisée en ce qu'elle comporte en outre:
- une interface de ressources (3) dans laquelle sont définies les opérations permettant d'agir sur lesdites ressources de traitement de signal,
- une unité de gestion des ressources (2) pour allouer dynamiquement les ressources de traitement de signal en fonction de l'opération de traitement de signal à accomplir et gérer les échanges entre ressources de traitement de signal,
- une interface d'application (5) dans laquelle sont définies lesdites fonctions multimédia et,
- une unité d'application (4) comprenant un programme d'application pour appliquer lesdites fonctions multimédia.
